(19) Europäisches Patentamt
European Patent Office
Office européen des brevets

(11) Numéro de publication : 0 283 375 B1

# (12) FASCICULE DE BREVET EUROPEEN

(45) Date de publication du fascicule du brevet : 30.10.91 Bulletin 91/44

(51) Int. Cl.$^5$ : C01B 21/098

(21) Numéro de dépôt : 88400524.0

(22) Date de dépôt : 04.03.88

## (54) Procédé de préparation de polychlorophosphazène.

(30) Priorité : 10.03.87 FR 8703252

(43) Date de publication de la demande : 21.09.88 Bulletin 88/38

(45) Mention de la délivrance du brevet : 30.10.91 Bulletin 91/44

(84) Etats contractants désignés : AT BE CH DE ES FR GB GR IT LI LU NL SE

(56) Documents cités :
EP-A- 0 026 685
EP-A- 0 178 997
EP-A- 0 187 207
DIE MAKROMOLEKULARE CHEMIE, vol. 183, no. 5, mai 1982, pages 1137-1143, Heidelberg, DE; M. HELIOUI et al.: "Nouvelle préparation de polychlorophosphazènes linéaires"

(73) Titulaire : ATOCHEM
4 & 8, Cours Michelet La Défense 10
F-92800 Puteaux (FR)

(72) Inventeur : Chambrette, Jean-Paul
9 rue Caplanne
F-64140 Billère (FR)
Inventeur : De Jaeger, Roger
8 rue des Buissons Grusons
F-59152 Chereng (FR)
Inventeur : Potin, Philippe
9 Rue des Pâquerettes
F-64140 Billère (FR)

(74) Mandataire : Rochet, Michel et al
ATOCHEM Département Propriété Industrielle
4, Cours Michelet La Défense 10 Cedex 42
F-92091 Paris-La-Défense (FR)

EP 0 283 375 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

**Description**

La présente invention concerne un procédé de préparation de polychlorophosphazène à partir de N(dichlorophosphoryl)trichlorophosphazène.

On a décrit (brevet européen publié sous le n° 0026685) des polychlorophosphazènes linéaires de formule générale :

$$Cl_2\,(O)\,P[NPCl_2]_n\,Cl$$

et la préparation de ces produits par polycondensation du N(dichlorophosphoryl)trichlorophosphazène, selon le schéma :

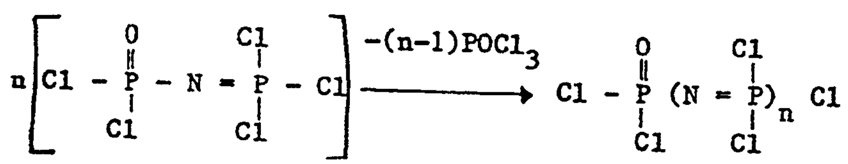


Cette polycondensation se fait généralement à une température élevée, de l'ordre de 200 à 350°C. Selon la référence citée la réaction de polycondensation est avantageusement réalisée sous agitation et en atmosphère de gaz inerte, tel que l'azote anhydre dans le but de favoriser le départ de $POCl_3$ (op. cit. page 7 lignes 5 à 13).

L'invention propose une technique permettant d'augmenter la vitesse de polycondensation du N(dichlorophosphoryl)trichlorophosphazène.

Plus précisément l'invention concerne un procédé de préparation de polychlorophosphazène par polycondensation de N(dichlorophosphoryl)trichlorophosphazène, ledit procédé étant caractérisé en ce que tout ou partie de la réaction de polycondensation est réalisé en présence d'une amine tertiaire.

L'amine tertiaire sera choisie parmi les produits stables à la température de la réaction et en présence du monomère et du polymère. De ce fait, si on utilise la réaction contrôlée telle que décrite dans la référence citée de la page 6 ligne 33 à la page 7 ligne 4, on peut utiliser une amine stable à 240°C en n'introduisant celle-ci qu'après abaissement de la température du milieu à cette valeur, la réaction ayant débuté à une température comprise entre 280° et 350°C.

Compte tenu des indications précédentes, on choisira d'une manière générale l'amine tertiaire parmi les composés stables à une température au moins égale à 200°C et de préférence supérieure à 240°C.

La notion de stabilité est utilisée ici pour désigner aussi bien l'absence de destruction du composé par décomposition que de réaction dudit composé avec les produits présents dans le milieu réactionnel.

D'une manière générale l'amine tertiaire peut être choisie parmi les amines aliphatiques renfermant au moins douze atomes de carbone et en particulier de 15 à 30 atomes de carbone, les amines aromatiques mono ou polycycliques, les noyaux aromatiques pouvant être substituées par des atomes d'halogène ou des groupements alkyle renfermant jusqu'à 3 atomes de carbone, les amines hétérocycliques renfermant 1 ou 2 atomes d'azote et, le cas échéant, d'autres hétéroatomes tel que O ou S, l'hétérocycle pouvant être substitué par des atomes d'halogène ou des groupements alkyle renfermant jusqu'à 3 atomes de carbone, aralkyle ou aryle ou former avec un ou plusieurs cyles aromatiques un système polycyclique condensé.

A titre d'illustration des amines tertiaires utilisables seules ou en mélange dans le procédé conforme à l'invention, on citera notamment :

- la tributylamine
- la triisopentylamine
- la tripentylamine
- la trihexylamine
- la tris(méthyl-2 butyl)amine
- la triheptylamine
- la trioctylamine
- la tridécylamine
- la triphénylamine
- la N,N diméthyl α naphtylamine
- la N,N diméthyl β naphtylamine
- la dibromo-2,6 pyridine
- les phényl-2, phényl-3 et phényl-4 pyridines

— les triméthyl-2,3,4, triméthyl-2,3,5, triméthyl-2,3,6, triméthyl-2,4,5 et triméthyl-2,4,6 pyridines
— la butyl-4 morpholine
— la benzyl-4 morpholine
— la phényl-4 morpholine
— le benzothiazole
— la phénanthridine
— la dichloro-2,4 méthyl-5 pyrimidine.

Parmi ces amines, on donnera tout particulièrement la préférence aux pyridines substituées et notamment aux triméthylpyridines.

Dans le procédé conforme à l'invention, on utilise d'une manière générale au moins 0,1% molaire d'amine tertiaire par rapport au monomère soumis à polycondensation ($P_2NOCl_5$ en formule abrégée). La quantité maximum d'amine tertiaire utilisable est liée au type de polymère que l'on souhaite obtenir : en effet, une quantité élevée d'amine tertiaire, par exemple supérieure à 2% molaire tend à provoquer une réticulation du polymère et conduit à limiter la polycondensation à des masses moléculaires faibles. De ce fait, et en vue d'obtenir des polymères de masse moléculaire suffisante pour permettre leur mise en oeuvre sous forme de pièces moulées, extrudées, sous forme de films... on utilisera avantageusement de 0,2 à 1,5% molaire d'amine tertiaire par rapport au monomère $P_2NOCl_5$ engagé dans la polycondensation.

Dans le procédé conforme à l'invention, l'amine tertiaire peut être introduite dans le réacteur de polycondensation en même temps que le monomère à polycondenser. Elle peut aussi être introduite dans le milieu réactionnel contenant un certain pourcentage de polycondensat et, d'une manière générale, l'amine tertiaire peut être introduite en une ou plusieurs fois ou progressivement pour autant que le taux de conversion du monomère en polymère soit compris entre 0% et environ 75-80%.

Le procédé conforme à l'invention peut être mis en oeuvre en solution par exemple dans un hydrocarbure aromatique chloré tel que le trichlorobenzène. S'agissant des conditions opératoires, on pourra suivre les indications générales et recommandées décrites dans le brevet européen 0026685 notamment les indications concernant la durée de réaction, la température, la pression, la possibilité de conduire la réaction successivement à des températures différentes et/ou à des pressions différentes. On pourra également se reporter à ce document au sujet du contrôle de la polycondensation et du traitement de purification du polychlorophosphazène obtenu. S'agissant de l'évolution de la polycondensation, on sait que la réaction s'accompagne de la libération de $POCl_3$ : de ce fait la vitesse de départ de $POCl_3$ est proportionnelle à la vitesse de croissance des chaînes macromoléculaires et l'intérêt du procédé conforme à l'invention est clairement mis en évidence en mesurant cette vitesse de départ de $POCl_3$, en présence ou en l'absence d'amine tertiaire ; ainsi qu'il apparaîtra à la lecture des exemples et à la consultation des graphiques, lesquels ne sont cependant donnés qu'à titre d'illustration et ne sauraient en aucun cas limiter l'invention.

## EXEMPLE 1

Dans un réacteur agité, maintenu sous courant d'azote et muni d'un dispositif permettant de séparer $POCl_3$ formé du solvant à reflux, on introduit 102,51 g (0,380 mole) de $P_2NOCl_5$ et 46,60 g de trichloro-1,2,4 benzène. L'ensemble est porté à la température de reflux soit 210°C. $P_2NOCl_5$ se polycondense en polychlorophosphazène et $POCl_3$, sous-produit de cette polycondensation, est recueilli avec un débit sensiblement linéaire en fonction du temps. Ce débit est exprimé en taux de conversion par heure. Il est de 4,04%/h. A 39% de taux de conversion, on introduit dans le réacteur 0,46 g (0,0038 mole) de triméthyl-2,4,6 pyridine. On constate une accélération immédiate du taux de conversion, dont la valeur atteint 15,70%/h entre 40 et 65% (figure 1, courbe a)- la Flèche marquant l'introduction de triméthyl-2,4,6 pyridine).

A titre de comparaison, si on ne procède pas à l'introduction d'amine tertiaire à 39% de taux de conversion, le débit de $POCl_3$, exprimé en taux de conversion, reste de 4,04%/h jusqu'à 65% (figure 1, courbe b).

## EXEMPLE 2

On renouvelle l'essai de l'exemple 1, en introduisant dans le réacteur 228,30 g (0,849 mole) de $P_2NOCl_5$, 116,12 g de trichloro-1,2,4 benzène et 1% molaire de triméthyl-2,4,6 pyridine (par rapport à $P_2NOCl_5$).

La partie linéaire de la courbe représentant la quantité de $POCl_3$ recueillie en fonction du temps, mesurée entre 20 et 70% de conversion et exprimée en taux de conversion par heure est de 10,71%/h (figure 2, courbe c).

A titre de comparaison, si on renouvelle cet essai en n'introduisant pas d'amine tertiaire, le débit, exprimé en taux de conversion par heure et mesuré entre 10 et 60%, est de 3,09%/h (figure 2, courbe d).

## Revendications

1. Procédé de préparation de polychlorophosphazène par polycondensation de N(dichlorophosphoryl)trichlorophosphazène, caractérisé en ce que tout ou partie de la réaction de polycondensation est réalisée en présence d'une amine tertiaire stable à la température de la réaction de polycondensation et non réactive avec les produits présents dans le milieu réactionnel, qui est introduite dans ledit milieu lorsque le taux de conversion du monomère est compris entre 0% et environ 75-80%.

2. Procédé selon la revendication 1, caractérisé en ce que l'amine tertiaire est stable à une température au moins égale à 200°C.

3. Procédé selon l'une quelconque des revendications 1 à 2, caractérisé en ce que l'amine tertiaire est choisie parmi les amines aliphatiques renfermant au moins douze atomes de carbone et en particulier de 15 à 30 atomes de carbone, les amines aromatiques mono ou polycycliques, les noyaux aromatiques pouvant être substitués par des atomes d'halogène ou des groupements alkyle renfermant jusqu'à 3 atomes de carbone, les amines hétérocycliques renfermant 1 ou 2 atomes d'azote et, le cas échéant, d'autres hétéroatomes tel que O ou S, l'hétérocycle pouvant être substitué par des atomes d'halogène ou des groupements alkyle renfermant jusqu'a 3 atomes de carbone, aralkyle ou aryle ou former avec un ou plusieurs cyles aromatiques un système polycyclique condensé.

4. Procédé selon l'une quelconque des revendications 1 à 3, caractérisé en ce que l'amine tertiaire est choisie dans le groupe constitué par :

— la tributylamine
— la triisopentylamine
— la tripentylamine
— la trihexylamine
— la tris(méthyl-2 butyl)amine
— la triheptylamine
— la trioctylamine
— la tridécylamine
— la triphénylamine
— la N,N diméthyl α naphtylamine
— la N,N diméthyl β naphtylamine
— la dibromo-2,6 pyridine
— les phényl-2, phényl-3 et phényl-4 pyridines
— les triméthyl-2,3,4, triméthyl 2,3,5, triméthyl 2,3,6, triméthyl-2,4,5 et triméthyl-2,4,6 pyridines
— la butyl-4 morpholine
— la benzyl-4 morpholine
— la phényl-4 morpholine
— le benzothiazole
— la phénanthridine
— la dichloro-2,4 méthyl-5 pyrimidine.

5. Procédé selon l'une quelconque des revendications 1 à 4, caractérisé en ce que l'amine tertiaire est choisie parmi les pyridines, pyridines substituées et notamment les triméthylpyridines.

6. Procédé selon l'une quelconque des revendications 1 à 5, caractérisé en ce que l'amine tertiaire est utilisée en quantité représentant au moins 0,1% molaire par rapport au N(dichlorophosphoryl)trichlorophosphazène soumis à la polycondensation.

7. Procédé selon l'une quelconque des revendications 1 à 5, caractérisé en ce que l'amine tertiaire utilisée représente de 0,2 à 1,5% molaire par rapport au N(dichlorophosphoryl)trichlorophosphazène.

## Patentansprüche

1. Verfahren zur Herstellung von Polychlorphosphazen durch Polykondensation von N(Dichlorphosphoryl)trichlorphosphazen, dadurch gekennzeichnet, daß die Polykondensationsreaktion ganz oder teilweise in Gegenwart eines tertiären Amins durchgeführt wird, das bei der Temperatur der Polykondensationsreaktion stabil und gegenüber den im Reaktionsmedium vorhandenen Produkten inert ist und das in dieses Medium eingebracht wird, solange der Umsetzungsgrad des Monomeren zwischen 0 und etwa 75 bis 80% beträgt.

2. Verfahren nach Anspruch 1, dadurch gekennzeichnet, daß das tertiäre Amin bei einer Temperatur von wenigstens 200°C stabil ist.

3. Verfahren nach Anspruch 1 oder 2, dadurch gekennzeichnet, daß das tertiäre Amin ausgewählt ist aus

den wenigstens 12 und insbesonders 15 bis 30 Kohlenstoffatome enthaltenden aliphatischen Aminen, mono- oder polycyclischen aromatischen Aminen, deren aromatische Kerne durch Halogenatome oder bis zu 3 Kohlenstoffatome enthaltende Alkylgruppen substituiert sein können, und 1 oder 2 Stickstoffatome und gegebenenfalls andere Heteroatome wie O oder S enthaltenden heterocyclischen Aminen, wobei der Heterocyclus durch Halogenatome oder bis zu 3 Kohlenstoffatome enthaltende Alkylgruppen und Aralkyl- oder Arylgruppen substituiert sein oder mit einem oder mehreren aromatischen Ringen ein kondensiertes polycyclisches System bilden kann.

4. Verfahren nach einem der Ansprüche 1 bis 3, dadurch gekennzeichnet, daß das tertiäre Amin aus der Gruppe ausgewählt ist, die besteht aus

— Tributylamin
— Triisopentylamin
— Tripentylamin
— Trihexylamin
— Tris(2-Methylbutyl)amin
— Triheptylamin
— Trioctylamin
— Tridecylamin
— Triphenylamin
— N,N-Dimethyl-α-naphtylamin
— N,N-Dimethyl-β-naphtylamin
— 2,6-Dibrompyridin
— 2-Phenyl-, 3-Phenyl- und 4-Phenylpyridin
— 2,3,4-Trimethyl-, 2,3,5-Trimethyl-, 2,3,6-Trimethyl-, 2,4,5-Trimethyl- und 2,4,6-Trimethylpyridin
— 4-Butylmorpholin
— 4-Benzylmorpholin
— 4-Phenylmorpholin
— Benzothiazol
— Phenanthridin und
— 2,4-Dichlor-5-Methylpyrimidin.

5. Verfahren nach einem der Ansprüche 1 bis 4, dadurch gekennzeichnet, daß das tertiäre Amin aus Pyridinen, substituierten Pyridinen und insbesondere Trimethylpyridinen ausgewählt ist.

6. Verfahren nach einem der Ansprüche 1 bis 5, dadurch gekennzeichnet, daß das tertiäre Amin mit einer Menge von wenigstens 0,1 Mol%, bezogen auf das der Polykondensation unterzogene N(Dichlorphosphoryl)trichlorphosphazen, verwendet wird.

7. Verfahren nach einem der Ansprüche 1 bis 5, dadurch gekennzeichnet, daß das verwendete tertiäre Amin 0,2 bis 1,5 Mol%, bezogen auf das N(Dichlorphosphoryl)trichlorphosphazen, ausmacht.

**Claims**

1. Process for the preparation of polychlorophosphazene by polycondensation of N-(dichlorophosphoryl)trichlorophosphazene, characterised in that all or part of the polycondensation reaction is carried out in the presence of a tertiary amine which is stable at the temperature of the polycondensation reaction and which is unreactive with the products present in the reaction mixture and which is introduced into the said mixture when the degree of conversion of the monomer is between 0% and about 75-80%.

2. Process according to Claim 1, characterised in that the tertiary amine is stable at a temperature of at least 200°C.

3. Process according to any one of Claims 1 to 2, characterised in that the tertiary amine is chosen from aliphatic amines containing at least twelve carbon atoms and in particular from 15 to 30 carbon atoms, mono- or polycyclic aromatic amines, it being possible for the aromatic nuclei to be substituted by halogen atoms or alkyl groups containing up to 3 carbon atoms, heterocyclic amines containing 1 or 2 nitrogen atoms and, if appropriate, other heteroatoms such as O or S, it being possible for the heterocyclic ring to be substituted by halogen atoms or alkyl groups containing up to 3 carbon atoms, aralkyl or aryl, or to form, with one or more aromatic rings, a condensed polycyclic system.

4. Process according to any one of Claims 1 to 3, characterised in that the tertiary amine is chosen from the group consisting of :

— tributylamine
— triisopentylamine

— tripentylamine
— trihexylamine
— tri(2-methylbutyl)amine
— triheptylamine
— trioctylamine
— tridecylamine
— triphenylamine
— N,N-dimethyl-α-naphthylamine
— N,N-dimethyl-β-naphthylamine
— 2,6-dibromopyridine
— 2-phenyl, 3-phenyl and 4-phenyl pyridines
— 2,3,4-trimethyl, 2,3,5-trimethyl, 2,3,6-trimethyl, 2,4,5-trimethyl and 2,4,6-trimethyl pyridines
— 4-butylmorpholine
— 4-benzylmorpholine
— 4-phenylmorpholine
— benzothiazole
— phenanthridine
— 2,4-dichloro-5-methylpyrimidine.

5. Process according to any one of Claim 1 to 4, characterised in that the tertiary amine is chosen from pyridines, substituted pyridines and especially trimethylpyridines.

6. Process according to any one of Claims 1 to 5, characterised in that the tertiary amine is employed in a quantity representing at least 0.1 mol% relative to the N-(dichlorophosphoryl)trichlorophosphazene subjected to the polycondensation.

7. Process according to any one of Claims 1 to 5, characterised in that the tertiary amine employed represents from 0.2 to 1.5 mol% relative to N-(dichlorophosphoryl)trichlorophosphazene.

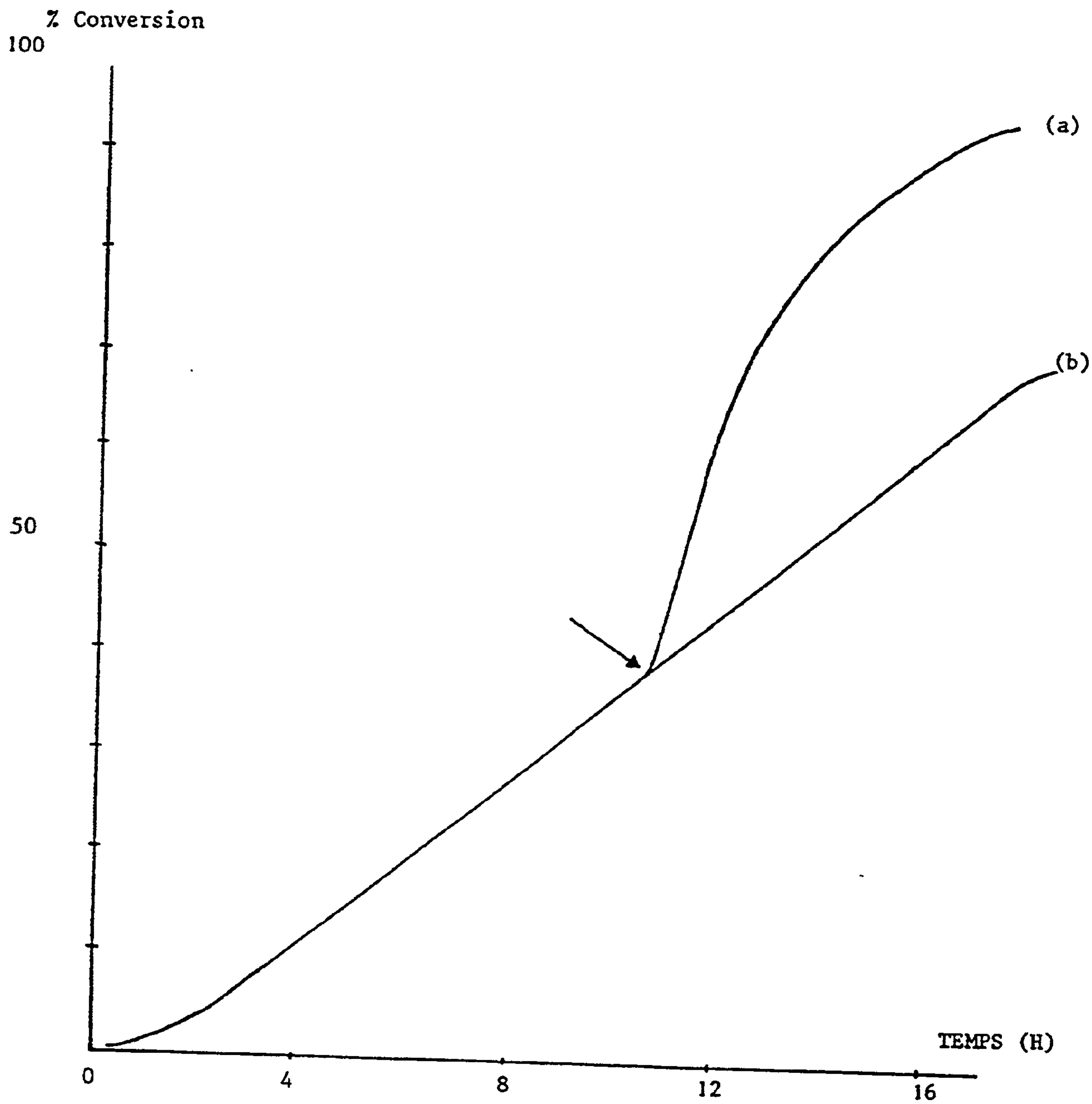


FIGURE 1

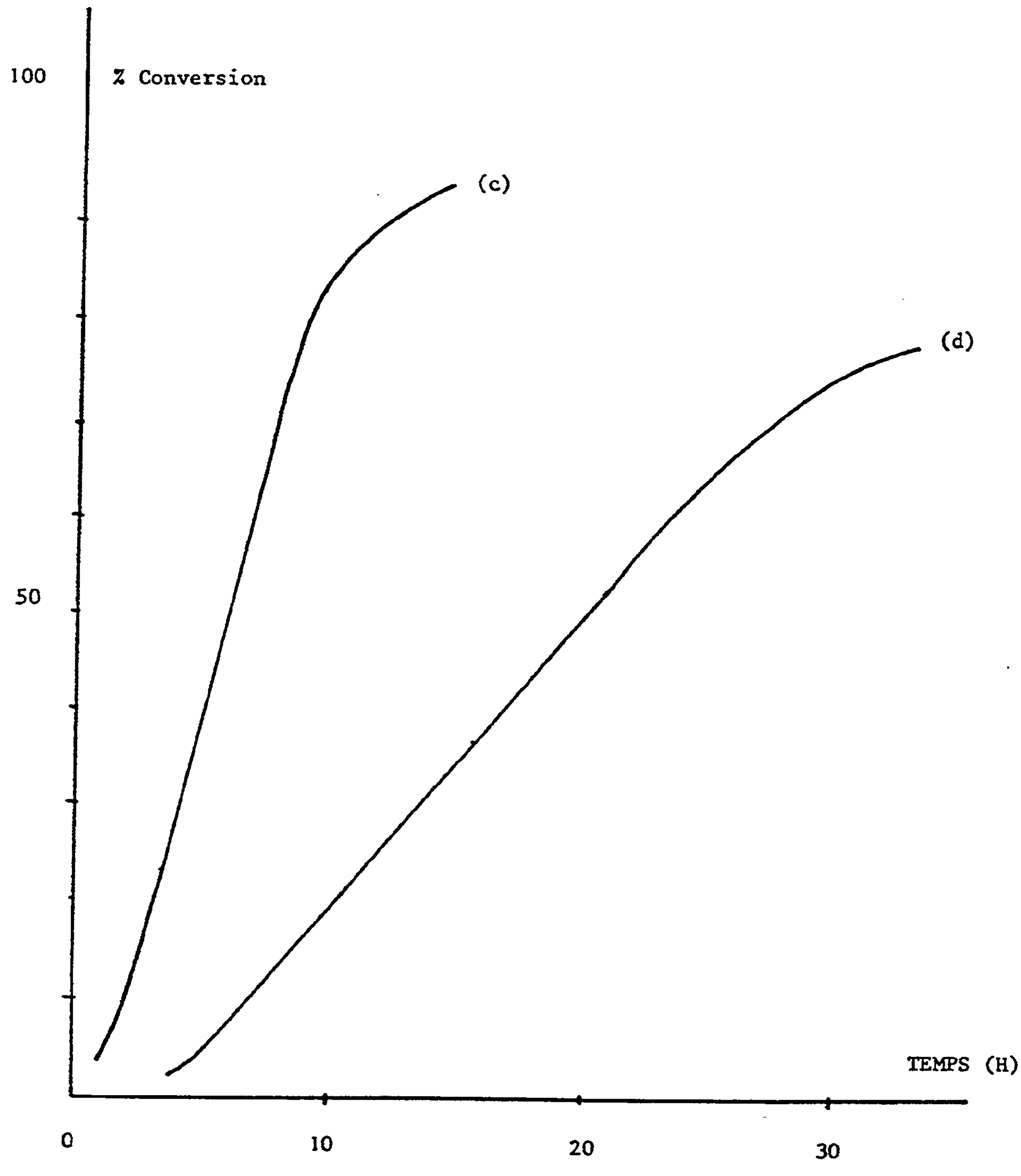


FIGURE 2